(19) Europäisches Patentamt
European Patent Office
Office européen des brevets

(11) **EP 1 785 408 A1**

(12) **DEMANDE DE BREVET EUROPEEN**

(43) Date de publication:
**16.05.2007 Bulletin 2007/20**

(51) Int Cl.:
*C04B 38/06* (2006.01)    *H01M 8/12* (2006.01)

(21) Numéro de dépôt: **05300928.8**

(22) Date de dépôt: **15.11.2005**

(84) Etats contractants désignés:
**AT BE BG CH CY CZ DE DK EE ES FI FR GB GR HU IE IS IT LI LT LU LV MC NL PL PT RO SE SI SK TR**
Etats d'extension désignés:
**AL BA HR MK YU**

(71) Demandeur: **L'AIR LIQUIDE, Société Anonyme pour l'Etude
et l'Exploitation des Procédés Georges Claude
75321 Paris Cedex 07 (FR)**

(72) Inventeurs:
• **Richet, Nicolas
78330 Fontenay-Le-Fleury (FR)**

• **Del Gallo, Pascal
91410 Dourdan (FR)**
• **Trebuchaire, Laetitia
87000 Limoges (FR)**
• **Chaput, Christophe
87410 Le Palais-sur-Vienne (FR)**

(74) Mandataire: **Conan, Philippe Claude et al
L'Air Liquide SA
Département Propriété Intellectuelle
75, quai d'Orsay
75321 Paris Cédex 07 (FR)**

(54) **Procédé d'élaboration de supports poreux céramiques de microstructure contrôlée**

(57) Procédé de préparation d'une pièce en matériau céramique à partir d'une poudre de matériau céramique, comprenant les étapes successives suivantes :
une étape (a) de désagglomération de la poudre céramique en phase liquide ;
une étape (b) d'incorporation de porogènes dans la dispersion de poudre préparée à l'étape (a) ;
une étape (c) d'élimination du milieu liquide de la dispersion préparée à l'étape (b) ;
une étape (d) de mise en forme des agglomérat de poudres obtenus à l'étape (c) ;
une étape (e) de déliantage de la préforme préparée à l'étape (d) ; et
une étape (f) de frittage de la pièce déliantée préparée à l'étape (e).

EP 1 785 408 A1

**Description**

L'invention se rapporte à la préparation de matériaux céramiques poreux.

Le développement de la porosité dans un matériau céramique est obtenu par quatre méthodes qui sont la consolidation d'un empilement non compact de particules, l'imprégnation d'une préforme par une suspension céramique et densification de la structure formée, le contrôle de la microstructure d'un précurseur de la céramique à élaborer ou l'ajout d'une phase secondaire qui après élimination laisse une porosité résiduelle.

L'empilement de particules céramiques pour former la porosité est décrit par exemple dans la demande internationale publiée sous le numéro WO 03 / 070661, dans le brevet des Etats Unis d'Amérique publié sous le numéro US 6,617,270 B1 et dans la demande de brevet des Etats Unis d'Amérique publiée sous le numéro US 2003/039774 A1. Cette technique utilise la distribution de la taille de grains afin de réaliser un empilement non compact de particules. Un mélange de grosses et de fines particules permet d'obtenir un pontage entre les particules les plus grandes. La distribution en taille de la porosité est difficile à contrôler car elle est liée à la distribution en taille des particules céramiques et au procédé d'élaboration. La résistance mécanique du matériau est limitée par la solidité des ponts entre les particules. Cette technique d'empilement aboutit à une microstructure finale "non contrôlée" notamment en terme de distribution des pores ou d'homogénéité de la taille des pores.

L'imprégnation d'une préforme, souvent de nature organique, par une suspension céramique permet aussi d'élaborer une structure poreuse. Cette méthode est décrite par exemple dans le brevet des Etats Unis d'Amérique publié sous le numéro 5,066,432 ou dans la demande internationale publiée sous le numéro WO 01/60515. Après décomposition thermique de la préforme, les brins céramiques formés sont densifiés par frittage. La structure de la porosité est directement liée à celle de la préforme organique utilisée et au mouillage de la suspension. La porosité ouverte est grande car elle est nécessaire à la bonne imprégnation de la préforme. La résistance mécanique de ces matériaux est liée à la taille des brins de la préforme. Cette technique est employée pour l'élaboration de mousses céramiques. Une des difficultés est l'absence de porosité macro et microscopique (au niveau des brins), la porosité totale étant souvent celle de l'empreinte de la préforme. Avec cette technique on obtient une porosité issue de la préforme avec comme inconvénient principal la difficulté à évacuer les organiques. Il est également très difficile d'obtenir une porosité faible (<40%) par cette technique. Ceci nécessite un remplissage homogène de la suspension céramique dans la mousse ce qui pose des problèmes techniques tels les dimensions des pièces.

L'obtention d'une porosité ouverte plus faible en contrôlant la microstructure d'un précurseur céramique, généralement sous forme de gel est décrite dans les brevets des Etats unis d'Amérique publiés sous les numéros 5,227,342 et US 6,645,571 B1 ainsi que dans les demandes de brevets des Etats Unis d'Amérique publiées sous les numéros US 2004/0185181 A1 et US 2003/052428 A1. La porosité peut être ajustée en contrôlant le degré d'agglomération des particules céramiques. Cette technique est donc comparable à une porosité d'empilement des particules avec une modification de la compacité de l'empilement en fonction de l'état d'agglomération des particules céramiques. Des composés organiques peuvent également être utilisés pour structurer les particules céramiques dans une suspension. Des micelles portant une charge électrique en surface peuvent attirer les particules céramiques par effet électrostatique et après séchage et décomposition former une structure poreuse qui sera consolidée par frittage. Une autre variante de cette méthode, décrite dans le brevet des Etats Unis d'Amérique publié sous le numéro US 6,645,571 B1, consiste à faire mousser une suspension avant de gélifier la structure Cette variante est cependant difficilement extrapolable à l'échelle industrielle ou pour préparer des pièces de grandes dimensions.

L'incorporation d'une phase secondaire, souvent organique, qui après calcination laisse une certaine porosité est décrite dans les brevets des Etats Unis d'Amérique publiés sous les numéros US 6,617,270 B1 et US 6,573,208 B1 ainsi que dans la demande de brevet européen publiée sous le numéro, EP 0 983 980 A. La structure de la porosité est directement liée à la quantité de phase secondaire introduite, à la distribution en taille des particules et à leur répartition autour des particules céramiques. Selon l'enseignement technique de EP 0 983 980, les propriétés mécaniques ne sont pas dégradées en utilisant au moins deux classes granulométriques pour le porogène. Cette technique est, avec le "contrôle de l'empilement des particules", la plus utilisée industriellement.

Les inventeurs ont donc cherché à développer un nouveau procédé de préparation de matériaux céramiques poreux qui permette de contrôler et/ou d'améliorer le contrôle des caractéristiques de sa microstructure poreuse, notamment la taille et la distribution des pores, la taille des particules constituant le squelette céramique et le volume poreux total.

L'invention proposée est relative à un procédé d'élaboration permettant de contrôler la microstructure d'un matériau céramique poreux. Ce procédé permet de jouer à volonté sur deux principes utilisés pour créer de la porosité, l'empilement de particules et l'ajout d'un porogène.

C'est pourquoi l'invention a pour objet un procédé de préparation d'un matériau céramique à partir d'une poudre de matériau céramique, comprenant les étapes successives suivantes :

une étape (a) de désagglomération de la poudre céramique en phase liquide ;

une étape (b) d'incorporation de porogènes dans la dispersion de poudre préparée à l'étape (a) ;
une étape (c) d'élimination du milieu liquide de la dispersion préparée à l'étape (b) ;
une étape (d) de mise en forme des agglomérats de poudre obtenus à l'étape (c) ;
une étape (e) de déliantage de la préforme préparée à l'étape (d) ; et
une étape (f) de frittage de la pièce déliantée préparée à l'étape (e).

L'objectif de l'étape (a) du procédé tel que défini ci-dessus, est le contrôle de la porosité intra-agglomérat. Par désagglomération de la poudre on entend l'action ayant pour but de casser les agglomérats de particules qui se forment lors de l'élaboration et/ou du stockage de la poudre. La maîtrise de cette étape permet donc de contrôler le volume de la porosité intra-agglomérat résiduelle dans le matériau final. La désagglomération peut être réalisée en phase liquide, tel l'eau ou l'éthanol, dans une jarre, avec des médias de broyage, par exemple les billes en zircone. Les paramètres qui doivent être contrôlés sont les volumes relatifs de poudre et de média de désagglomération par rapport à celui de la jarre, la quantité de phase liquide, la nature des médias de désagglomération qui peuvent introduire une pollution, la vitesse de rotation de la jarre et la durée du traitement.

Le procédé tel que défini ci-dessus peut éventuellement comprendre une étape (a1) d'ajout d'un ou plusieurs additifs choisis parmi les agents dispersants, les agents liants et/ou les agents plastifiants, dans la dispersion de poudre préparée à l'étape (a) et préalablement à la mise en oeuvre de l'étape (b). L'ajout de tels composés organiques est destiné à faciliter la mise en forme.

L'ajout d'un agent dispersant permet de stabiliser la dispersion de poudre obtenue à l'issue de l'étape (a). La nature et la quantité de dispersant à ajouter dans la suspension, sont évaluées à l'aide des outils utilisés par l'homme de l'art. Ils dépendent essentiellement de la nature de la phase liquide utilisée, de la nature de la poudre céramique, de la morphologie et de la surface spécifique de la poudre céramique. L'adsorption est réalisée dans les mêmes conditions que la désagglomération, en ajoutant une quantité définie de dispersant dans la jarre et en poursuivant le traitement pendant le temps nécessaire à son adsorption. La bonne désagglomération de la poudre est contrôlée en mesurant la distribution granulométrique et la surface spécifique de la poudre. Une observation au microscope électronique à balayage peut également être réalisée pour vérifier l'état de la poudre. Comme agent dispersant, on peut citer par exemple le phospholan. Un traitement de désagglomération de 5 heures permet de stabiliser la distribution granulométrique.

Les liants et les plastifiants sont nécessaires lorsque la mise en forme ultérieure est réalisée par extrusion ou par injection, qui sont des opérations impliquant une déformation plastique de la pâte de céramique pour obtenir la géométrie désirée. Le liant améliore la cohésion à la pâte céramique et le plastifiant en facilite la déformation. Les quantités mises en oeuvre de chacun des additifs sont adaptées à la technique de mise en forme choisie.

Différentes natures de porogènes peuvent être utilisées de l'étape (b) du procédé tel que défini ci-dessus pour créer de la porosité dans le matériau final : soit des porogènes synthétiques, soit des porogènes naturels. Le choix du type de porogène dépend principalement de la forme, de la taille et de la distribution de la porosité souhaitée. Un agent organique synthétique sera préféré pour sa forme sphérique, régulière et sa répartition granulométrique parfaitement contrôlée, contrairement à un porogène naturel de type amidon de maïs ou coquilles de noix. Le choix de la distribution granulométrique et de la quantité de porogène dépend principalement de la taille de la porosité et du volume poreux souhaité. Ainsi, pour obtenir un volume poreux interconnecté, il est essentiel de tenir compte de la fermeture des pores de petites tailles, créés par les particules les plus fines du porogène. En effet, après son élimination, le processus de densification de la matrice céramique peut provoquer la fermeture de certains pores. Par conséquent, le taux de porogène introduit dans la structure céramique doit être à peu près 1,5 fois plus élevé que le volume poreux souhaité au final dans la matrice céramique.

D'autre part, le second critère de choix est la granulométrie du ou des porogènes, qui définit la taille des pores, leurs interconnections et la distribution poreuse finale. Ainsi, un porogène de distribution granulométrique étroite, comprise entre 5 $\mu$m et 40 $\mu$m, permettra d'obtenir des pores d'une taille avoisinant les 20 $\mu$m. A l'issue de cette étape la poudre céramique peut contenir jusqu'à 30 % à 40 % de sa masse en produits organiques.

L'objectif de l'étape (c) du procédé tel que défini précédemment, est d'éliminer la phase liquide utilisée pour la désagglomération et pour l'incorporation éventuelle des additifs organiques. Elle influence fortement l'homogénéité de la répartition du porogène dans la poudre à mettre en forme. Elle peut également permettre de faciliter l'utilisation de la poudre lors de la mise en forme, grâce au contrôle de la morphologie des grains. La phase liquide peut être éliminée de différentes manières, soit par simple évaporation dans une étuve, soit par évaporation dans un évaporateur rotatif, soit par atomisation de la poudre pour former des agglomérats contenant le porogène et le liant, soit par centrifugation, soit par filtration.

La première technique d'élimination est la plus facile à mettre en oeuvre ; elle nécessite cependant quelques précautions pour éviter la sédimentation du porogène. La suspension est donc coulée sur des plaques en une fine couche avant de subir un séchage lent en étuve à 80°C. On obtient une répartition assez homogène de porogène.

Lorsque l'on utilise un évaporateur rotatif, le mouvement appliqué sur la suspension pendant l'évaporation du solvant permet de limiter la sédimentation du porogène. Cette technique est difficile à mettre en oeuvre industriellement.

Une troisième technique permet de sécher une grande quantité de suspension ; il s'agit de l'atomisation. Elle consiste à envoyer la suspension sous forme de gouttelettes de tailles contrôlées, dans une chambre chauffée. Les gouttelettes sont séchées pendant leur vol dans la chambre, ce qui permet d'obtenir des agglomérats de particules céramiques et de porogène présentant une bonne sphéricité. Ce type de poudre est beaucoup plus facile à mettre en forme grâce à sa bonne coulabilité obtenue par la forme régulière des particules. Cette technique est utilisable industriellement.

L'étape (c) du procédé tel que défini précédemment, conduit généralement à des agglomérats de poudre qui sont mis en oeuvre à l'étape (d) de mise en forme.

Selon un aspect du procédé tel que défini précédemment l'étape (c) d'élimination du milieu liquide est réalisée par évaporation ou par atomisation de la poudre.

Le procédé de mise en forme appliqué à l'étape (d) du procédé tel que défini précédemment, est choisi en fonction de la forme, de la complexité et de la taille de la pièce à réaliser. Il y a par exemple, le pressage isostatique ou le pressage uniaxial pour la réalisation de pièces assez simples et de taille petite à moyenne, l'injection pour les petites pièces de forme complexe, l'extrusion pour les profilés, le coulage en bande pour la réalisation de plaques ou le coulage en moules de plâtre pour la réalisation de pièces creuses.

Selon un aspect particulier, du procédé tel que défini précédemment, lorsque la mise en forme est effectuée par coulage en moule en plâtre, l'étape (c) d'élimination de l'eau fait partie intégrante de l'étape (d) de mise en forme, l'eau étant absorbée par ledit moule en plâtre. Selon un autre aspect du procédé tel que défini précédemment l'étape (d) est effectuée par pressage isostatique, pressage uniaxial, injection, extrusion ou par coulage en bande des agglomérats de poudres préparés à l'étape (c).

L'étape (e) de déliantage de la préforme préparée à l'étape (d) consiste en un traitement thermique effectué entre les températures de début et de fin de dégradation des constituants organiques présents dans la poudre, en général entre 100°C et 800°C. La vitesse de montée en température est lente par exemple entre 0,2°C/minute et 0,5°C/minute pour permettre un départ progressif des composés organiques. La température est maintenue constante le temps nécessaire à assurer l'élimination totale des produits organiques présents. Cette durée peut varier de quelques minutes à plusieurs heures. En effet, son élimination doit être parfaitement maîtrisée pour éviter l'apparition de défaut dans l'empilement des particules céramiques. A l'issue de l'étape de déliantage, la résistance mécanique de la pièce est extrêmement faible car elle est uniquement assurée par les interactions entre les particules céramiques compactées lors de l'étape de mise en forme.

L'étape (f) de frittage de la pièce déliantée, préparée à l'étape (e) permet la densification de la céramique, sans toutefois provoquer la fermeture de la porosité résiduelle laissée par l'agent porogène et/ou de la porosité intra-agglomérats. En fonction de la température et de la durée du traitement, cette dernière pourra être partiellement ou totalement fermée. Après frittage, la pièce obtenue présente une distribution de la taille des pores liée à la taille des particules de porogène et à la porosité intra-agglomérats résiduelle.

Dans le procédé tel que défini précédemment, le matériau céramique est un conducteur ionique, de préférence un conducteur ionique et électronique, qui comprend plus particulièrement au moins un réseau cristallin comportant au moins une lacune en oxygène, ledit matériau étant, par exemple choisi parmi les céramiques de structure cristalline perovskite et les oxydes de cérium. Le matériau est caractérisé en terme de volume poreux, taille des pores, interconnections entre les pores et distribution poreuse par une analyse de porosimétrie au mercure. Les observations de la microstructure sont effectuées par microscopie électronique à balayage et test de perméabilité.

Selon un aspect de la présente invention celle-ci a pour objet le procédé tel que défini précédemment, dans lequel la poudre de matériau céramique mise en oeuvre est une poudre de matériau (A) comportant pour 100 % de son volume :

(i) - au moins 75 % en volumique et au plus 100 % volumique d'un composé ($C_1$) choisi parmi les oxydes céramiques dopés qui, à la température d'utilisation, possède un réseau cristallin de structure pérovskite présentant des lacunes en ions oxygène, et de formule (I) :

$$M\alpha_{1-x-u}\ M\alpha'_x\ M\alpha''_u\ M\beta_{1-y-v}\ M\beta'_y\ M\beta''_v O_{3-w} \qquad (I)$$

dans laquelle :

- $M\alpha$ représente un atome choisi parmi le scandium, l'yttrium ou dans les familles des lanthanides, des actinides ou des métaux alcalinoterreux ;
- $M\alpha'$ différent de $M\alpha$, représente un atome choisi parmi le scandium, l'yttrium ou dans les familles des lanthanides, des actinides ou des métaux alcalino-terreux ;

- Mα" différent de Mα et de Mα', représente un atome choisi parmi l'aluminium (Al), le gallium (Ga), l'indium (In), le thallium (Tl) ou dans la famille des métaux alcalino-terreux ;
- Mβ représente un atome choisi parmi les métaux de transition ;
- Mβ' différent de Mβ, représente un atome choisi parmi les métaux de transition, l'aluminium (Al), l'indium (In), le gallium (Ga), le germanium (Ge), l'antimoine (Sb), le bismuth (Bi), l'étain (Sn), le plomb (Pb) ou le titane (Ti) ;
- Mβ" différent de Mβ et de Mβ', représente un atome choisi parmi les métaux de transition, les métaux de famille des alcalino-terreux, l'aluminium (Al), l'indium (In), le gallium (Ga), le germanium (Ge), l'antimoine (Sb), le bismuth (Bi), l'étain (Sn), le plomb (Pb) ou le titane (Ti) ;
- $0 < x \leq 0{,}5$ ;
- $0 \leq u \leq 0{,}5$ ;
- $(x+u) \leq 0{,}5$ ;
- $0 \leq y \leq 0{,}9$ ;
- $0 \leq v \leq 0{,}9$ ;
- $0 \leq (y + v) \leq 0{,}9$

et w est tel que la structure en cause est électriquement neutre ;

(ii) - éventuellement jusqu'à 25 % en volume d'un composé ($C_2$), différent du composé ($C_1$), choisi <u>ou bien parmi</u> les matériaux de type oxyde comme les oxydes de bore, d'aluminium, de gallium, de cérium, de silicium, de titane, de zirconium, de zinc, de magnésium ou de calcium, de préférence parmi l'oxyde de magnésium (MgO), l'oxyde de calcium (CaO), l'oxyde d'aluminium ($Al_2O_3$), l'oxyde de zirconium ($ZrO_2$), l'oxyde de titane ($TiO_2$) ou la cérine ($CeO_2$) ; les oxydes mixtes de strontium et d'aluminium $SrAl_2O_4$ ou $Sr_3Al_2O_6$ ; l'oxyde mixte de baryum et de titane ($BaTiO_3$) ; l'oxyde mixte de calcium et de titane ($CaTiO_3$) ; les silicates d'aluminium et/ou de magnésium comme la mullite ($2SiO_2 . 3Al_2O_3$), la cordiérite ($Mg_2Al_4Si_5O_{18}$) ou la phase spinelle $MgAl_2O_4$ ; l'oxyde mixte de calcium et de titane ($CaTiO_3$) ; les phosphates de calcium et leurs dérivés, comme l'hydroxy apatite $Ca_{10}(PO_4)_6(OH)_2$ ou le phosphate tricalcique $Ca_3(PO_4)_2$ ; ou encore des matériaux de type perovskite comme $La_{0,5}Sr_{0,5}Fe_{0,9}Ti_{0,1}O_{3-\delta}$, $La_{0,6}Sr_{0,4}Fe_{0,9}Ga_{0,1}O_{3-\delta}$, $La_{0,5}Sr_{0,5}Fe_{0,9}Ga_{0,1}O_{3-\delta}$ ou $La_{0,6}Sr_{0,4}Fe_{0,9}Ti_{0,1}O_{3-\delta}$ <u>ou bien parmi</u> des matériaux de type non oxyde et de préférence parmi les carbures ou les nitrures comme le carbure de silicium (SiC), le nitrure de bore (BN), le nitrure d'aluminium (AlN) ou le nitrure de silicium ($Si_3N_4$), les « sialon » (SiAlON), <u>ou bien parmi</u> le nickel (Ni), le platine (Pt), le palladium (Pd) ou le rhodium (Rh), les alliages métalliques ou des mélanges de ces différents types de matériaux et,

(iii) - éventuellement jusqu'à 2,5 % en volume d'un composé ($C_{1-2}$) produit d'au moins une réaction chimique représentée par l'équation :

$$xF_{C1} + yF_{C2} \rightarrow zF_{C1-2},$$

équation dans laquelle $F_{C1}$, $F_{C2}$ et $F_{C1-2}$, représentent les formules brutes respectives des composés ($C_1$), ($C_2$) et ($C_{1-2}$) et x, y et z représentent des nombres rationnels supérieurs ou égaux à 0 ;

Comme exemples de matériau (A) il y a celui dans lequel la proportion volumique en composé ($C_{1-2}$), éventuellement présent, tend vers 0 et/ou celui dans lequel la proportion volumique en composé ($C_2$) éventuellement présent, est supérieure ou égale à 0,1 % et inférieure ou égale à 10 % ;

Le composé ($C_1$) est par exemple choisi :

<u>ou parmi</u> les composés de formule (Ia) :

$$\text{(Ia),} \qquad La_{1-x-u}M\alpha'_x M\alpha''_u M\beta_{1-y-v} M\beta'_y M\beta''_v O_{3-w}$$

correspondant à la formule (I), dans laquelle Mα représente un atome de lanthane ;
<u>ou parmi</u> les composés de formule (Ib) :

$$\text{(Ib),} \qquad M\alpha_{1-x-u}Sr_x M\alpha''_u M\beta_{1-y-v} M\beta'_y M\beta''_v O_{3-w}$$

correspondant à la formule (I), dans laquelle Mα' représente un atome de strontium ;
<u>ou bien parmi</u> les composés de formule (Ic) :

$$\text{(Ic),} \qquad M\alpha_{1-x-u}M\alpha'_x M\alpha''_u Fe_{1-y-v} M\beta'_y M\beta''_v O_{3-w}$$

correspondant à la formule (I), dans laquelle Mβ représente un atome de fer ; comme le composé ($C_1$) choisi :

ou bien parmi les composés de formule (Id) :

$$\text{(Id),} \qquad La_{1-x-u}Sr_xM\alpha''_uFe_{1-y-v}M\beta'_yM\beta''_vO_{3-w}$$

correspondant à la formule (Ia) dans laquelle M$\alpha$' représente un atome de strontium et M$\beta$ représente un atome de fer ;
ou bien parmi les composés de formule (Ie) :

$$\text{(Ie),} \qquad La_{1-x-u}M\alpha'_xAl_uFe_{1-y-v}M\beta'_yM\beta''_vO_{3-w}$$

correspondant à la formule (Ia) dans laquelle M$\alpha$'' représente un atome d'aluminium et M$\beta$ représente un atome de fer ;
ou bien parmi les composés de formule (If) :

$$\text{(If),} \qquad La_{1-x-u}Sr_xFe_{1-y}M\beta'_yO_{3-w}$$

correspondant à la formule (Ia) dans laquelle M$\alpha$' représente un atome de strontium, M$\beta$ représente un atome de fer et u et v sont égaux à 0 ;
ou bien parmi les composés de formule (Ig) :

$$\text{(Ig),} \qquad La_{1-u}Ca_uFe_{1-y}M\beta'_yO_{3-w}$$

correspondant à la formule (Ia) dans laquelle M$\alpha$' représente un atome de calcium, M$\beta$ représente un atome de fer et x et v sont égaux à 0 ;
ou bien parmi les composés de formule (Ih) :

$$\text{(Ih),} \qquad La_{1-u}Ba_uFe_{1-y}M\beta'_yO_{3-w}$$

correspondant à la formule (Ia) dans laquelle M$\alpha$' représente un atome de baryum, M$\beta$ représente un atome de fer et x et v sont égaux à 0 ;
ou bien parmi les composés de formule (Ii) :

$$\text{(Ii),} \qquad La_{1x-u}Sr_xCa_uFe_{1-y-v}M\beta'_yM\beta''_vO_{3-w}$$

correspondant à la formule (Id) dans laquelle M$\alpha$'' représente un atome de calcium ;
ou parmi les composés de formule (Ij) :

$$\text{(Ij),} \qquad La_{1x-u}Sr_xBa_uFe_{1-y-v}M\beta'_yM\beta''_vO_{3-w}$$

correspondant à la formule (Id) dans laquelle M$\alpha$'' représente un atome de baryum.

Comme exemples de composés selon les formules précédentes, il y a par exemple le composé $(C_1)$ choisi parmi les composés de formules :

$La_{1-x}Sr_xFe_{1-y}Ga_vO_{3-w}$, $La_{1-x}Sr_xFe_{1-y}Ti_yO_{3-w}$, $La_{1-x}Sr_xFeO_{3-w}$, $La_{1-u}Ca_uFe_{1-y}Ga_vO_{3-w}$,
$La_{1-u}Ca_uFe_{1-y}Ti_yO_{3-w}$, $La_{1-u}Ca_uFeO_{3-w}$, $La_{1-u}Ba_uFe_{1-y}Ga_vO_{3-w}$,
$La_{1-u}Ba_uFe_{1-y}Ti_yO_{3-w}$, $La_{1-u}Ba_uFeO_{3-w}$, $La_{1-x-u}Sr_xAl_uFe_{1-y}Ti_yO_{3-w}$,
$La_{1-x-u}Sr_xCa_uFe_{1-y}Ti_yO_{3-w}$, $La_{1-x-u}Sr_xBa_uFe_{1-y}Ti_yO_{3-w}$, $La_{1-x-u}Sr_xAl_uFe_{1-y}Ga_vO_{3-w}$,
$La_{1-x-u}Sr_xCa_uFe_{1-y}Ga_vO_{3-w}$, $La_{1-x-u}Sr_xBa_uFe_{1-y}Ga_vO_{3-w}$, $La_{1-x}Sr_xFe_{1-y}Ti_yO_{3-w}$,
$La_{1-u}Ca_uFe_{1-y}Ti_yO_{3-w}$, $La_{1-u}Ba_uFe_{1-y}Ti_yO_{3-w}$, $La_{1-x}Sr_xFe_{1-y}Ga_vO_{3-w}$,
$La_{1-u}Ca_uFe_{1-y}Ga_vO_{3-w}$, $La_{1-u}Ba_uFe_{1-y}Ga_vO_{3-w}$, $La_{1-u}Ba_uFeO_{3-w}$, $La_{1-u}Ca_uFeO_{3-w}$ ou
$La_{1-x}Sr_xFeO_{3-w}$,

et plus particulièrement parmi ceux de formules :

$La_{0,6}Sr_{0,4}Fe_{0,9}Ga_{0,1}O_{3-w}$, $La_{0,9}Sr_{0,1}Fe_{0,9}Ga_{0,1}O_{3-w}$, $La_{0,5}Sr_{0,5}Fe_{0,9}Ti_{0,1}O_{3-w}$,
$La_{0,9}Sr_{0,1}Fe_{0,9}Ti_{0,1}O_{3-w}$, $La_{0,6}Sr_{0,4}Fe_{0,2}CO_{0,8}O_{3-w}$ ou $La_{0,9}Sr_{0,1}Fe_{0,2}CO_{0,8}O_{3-w}$.

dans le matériau A tel que défini précédemment, le composé $(C_2)$ est choisi parmi l'oxyde de magnésium (MgO), l'oxyde de calcium (CaO), l'oxyde d'aluminium ($Al_2O_3$), l'oxyde de zirconium ($ZrO_2$), l'oxyde de titane ($TiO_2$), les oxydes mixtes de strontium et d'aluminium $SrAl_2O_4$ ou $Sr_3Al_2O_6$, l'oxyde mixte de baryum et de titane ($BaTiO_3$), l'oxyde mixte de calcium et de titane ($CaTiO_3$), $La_{o,5}Sr_{0,5}Fe_{0,9}Ti_{0,1}O_{3-\delta}$ ou $La_{0,6}Sr_{0,4}Fe_{0,9}Ga_{0,1}O_{3-\delta}$.

## Exemple de réalisation

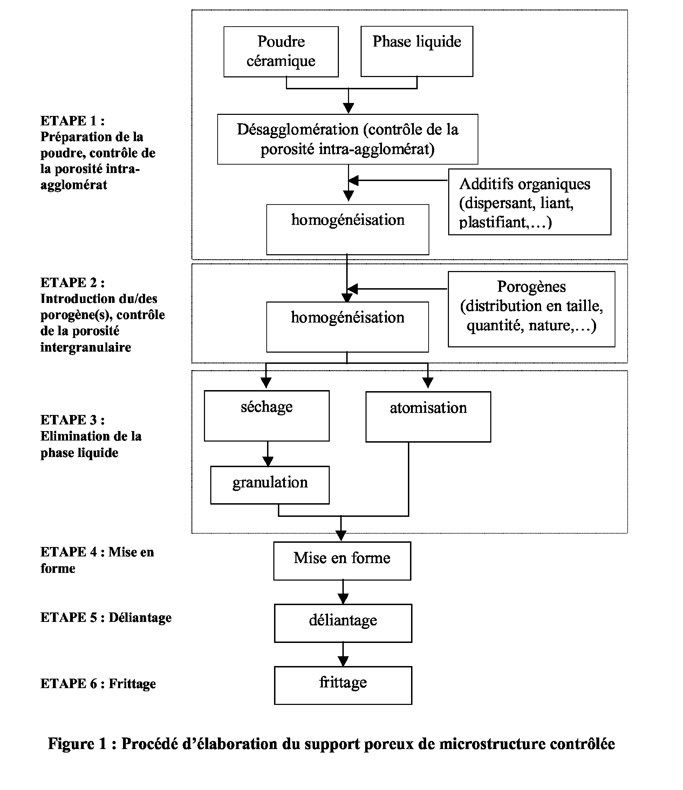

La figure 1 illustre l'ensemble des étapes du précédé revendiqué. On prépare un matériau céramique poreux en mettant en oeuvre ce procédé à partir d'une poudre de céramique $La_{0,5}Sr_{0,5}Fe_{0,9}Ti_{0,1}O_{3-w}$

**Etape (a) : Désagglomération** de la poudre céramique dans l'éthanol est effectuée avec les paramètres consignés dans le tableau suivant :

| Volume occupé par les billes | Matériau des billes | Vitesse de rotation de la jarre | Durée de la rotation | Volume de la jarre | Masse de poudre céramique |
|---|---|---|---|---|---|
| 0,3 litre | $ZrO_2$ | 700 tours / minute | 12 heures | 1 litre | 1 kg |

**Etape (a1) : Ajout d'additifs** A l'issue de l'étape (a) on ajoute x % massique de phospholan (agent dispersant) et l'on poursuit la desagglomération pendant 5 heurs supplémentaires

## Etape (b) : Incorporation de porogènes

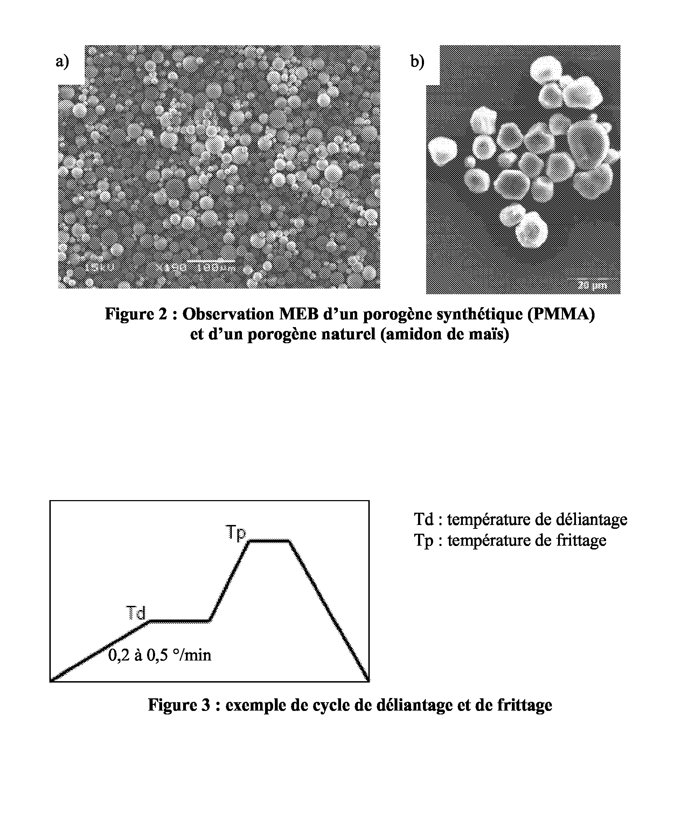

La figure 2a est une photo MEB (microscopie électronique à balayage) du polyméthacrylate (PMMA) qui est utilisé comme porogène dans le présent exemple sa distribution granulométrique est comprise entre 5 $\mu$m et 40 $\mu$m le composé est ajouté par simple mélange en jarre ; ,la figure 2b est une photo MEB de l'amidon de maïs. A l'issue de cette étape la poudre céramique contient de 30 % à 40 % de sa masse en produits organiques.

## Etape (c) : Elimination du solvant;

On élimine l'éthanol au moyen d'un évaporateur rotatif.

## Etape (d) : Mise en forme des agglomérat de poudres

On prépare des agglomérats de poudre par la technique de granulation en pulvérisant la suspension sur un plateau incliné en rotation

## Etapes(e) (f) : Déliantage puis frittage de la préforme

Le cycle de densification comporte deux étapes, le déliantage et le frittage. Un exemple de cycle est illustré par la figure 3. Pour le présent matériau, la température de déliantage (Td) est d'environ 650°C pendant 1 heure et la température de frittage (Tf) d'environ 1250 °C pendant 30 minutes

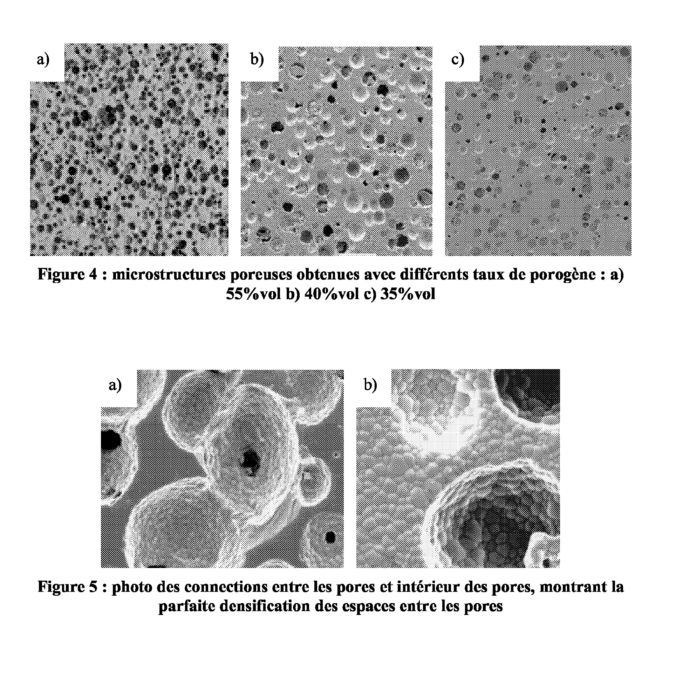

La figure 4 illustre un exemple de microstructures obtenues avec le procédé revendiqué. La photo 4a) permet de mettre en évidence une microstructure obtenue avec une forte teneur en porogène (55% volumique). La porosité est interconnectée et représente environ 40% du vol du matériau. La distribution en taille des pores est similaire à la distribution en taille des particules de porogène. Dans ce cas la porosité liée au porogène est majoritaire et sera d'autant plus importante que la quantité de porogène sera grande. Pour un niveau de porogène seuil correspondant à la percolation, la porosité pourra être ouverte et interconnectée. Un frittage poussé de la pièce pourra cependant conduire à de la porosité fermée, le cas échéant.

Les photos 4b) (40% volumique de porogène) et 4c) (35% volumique de porogène) font apparaître qu'il est possible d'obtenir une porosité fermée dont le volume total est contrôlé par le taux de porogène introduit dans la poudre de départ.

La figure 5a) permet de mettre en évidence les interconnections entre les pores et la compacité du matériau céramique entre les pores (taille des particules, porosité intra-brins). Dans les céramiques, la résistance mécanique est liée à la taille des grains et dans un matériau poreux à la forme et à la taille des pores. Une forme sphérique et des pores de petite taille conduisent à des propriétés mécaniques optimales. Ce contrôle de la distribution poreuse, de la forme et de la taille des pores, ainsi que de la taille de particules, est la conséquence directe du procédé de mise en oeuvre décrit à la figure 1.

La figure 5b) illustre les possibilités de contrôle de la forme des pores et de la répartition de la porosité. Dans ce cas, le porogène est localisé entre les agglomérats de particules céramiques. Dans le cas de l'utilisation d'agglomérats céramiques, le frittage peut être ajusté pour conserver une porosité résiduelle de taille différente de celle apportée par le porogène. Dans ces conditions, la porosité est obtenue selon les deux méthodes, l'empilement de particules et l'ajout de porogène. En diminuant la quantité de porogène, la structure s'oriente vers une porosité d'empilement majoritaire. L'étape de désagglomération permet de modifier la distribution en taille des agglomérats et donc de jouer sur la porosité intra-agglomérat.

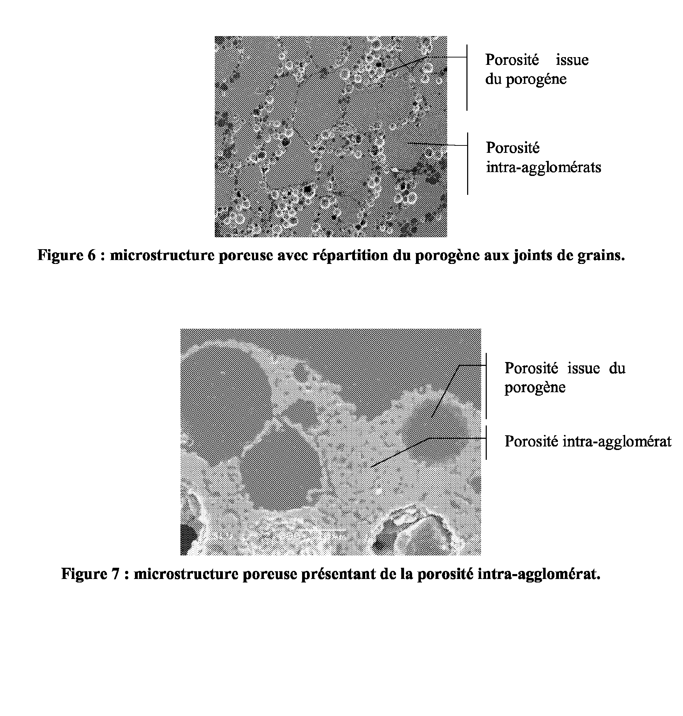

La figure 6 permet de mettre en évidence la porosité résiduelle intra-agglomérats. Cette porosité est fine et pourra être ouverte en fonction du traitement thermique appliqué au matériau.

**Revendications**

1. Procédé de préparation d'une pièce en matériau céramique à partir d'une poudre de matériau céramique, comprenant les étapes successives suivantes :

   une étape (a) de désagglomération de la poudre céramique en phase liquide ;
   une étape (b) d'incorporation de porogènes dans la dispersion de poudre préparée à l'étape (a) ;
   une étape (c) d'élimination du milieu liquide de la dispersion préparée à l'étape (b) ;
   une étape (d) de mise en forme des agglomérat de poudres obtenus à l'étape (c) ;
   une étape (e) de déliantage de la préforme préparée à l'étape (d) ; et
   une étape (f) de frittage de la pièce déliantée préparée à l'étape (e).

2. Procédé tel que défini à la revendication 1, comprenant une étape (a1) d'ajout d'un ou plusieurs additifs choisis parmi les agents dispersants, les agents liants et/ou les agents plastifiants, dans la dispersion de poudre préparée à l'étape (a) et préalablement à la mise en oeuvre de l'étape (b).

3. Procédé tel que défini à l'une des revendications 1 ou 2, dans lequel l'étape (c) d'élimination du milieu liquide est réalisée par évaporation ou par atomisation de la poudre

4. Procédé tel que défini à l'une des revendications 1 à 3, dans lequel l'étape (d) est effectuée par pressage isostatique, pressage uniaxial, injection, extrusion ou par coulage en bande des agglomérats de poudres préparés à l'étape (c).

5. Procédé tel que défini à l'une des revendications 1 à 4, dans lequel la poudre de matériau céramique mise en oeuvre est une poudre de matériau (A) comportant pour 100 % de son volume :

   (i) - au moins 75 % en volumique et au plus 100 % volumique d'un composé $(C_1)$ choisi parmi les oxydes céramiques dopés qui, à la température d'utilisation, sont sous forme d'un réseau cristallin présentant des lacunes en ions oxydes, de phase perovskite, de formule (I) :

   $$(I) \qquad M\alpha_{1-x-u}M\alpha'_xM\alpha'_uM\beta_{1-y-v}M\beta'_yM\beta''_vO_{3-w}$$

   dans laquelle :

   - $M\alpha$ représente un atome choisi parmi le scandium, l'yttrium ou dans les familles des lanthanides, des actinides ou des métaux alcalinoterreux ;
   - $M\alpha'$ différent de $M\alpha$, représente un atome choisi parmi le scandium, l'yttrium ou dans les familles des lanthanides, des actinides ou des métaux alcalino-terreux ;
   - $M\alpha''$ différent de $M\alpha$ et de $M\alpha'$, représente un atome choisi parmi l'aluminium (Al), le gallium (Ga), l'indium (In), le thallium (Tl) ou dans la famille des métaux alcalino-terreux ;
   - $M\beta$ représente un atome choisi parmi les métaux de transition ;
   - $M\beta'$ différent de $M\beta$, représente un atome choisi parmi les métaux de transition, l'aluminium (Al), l'indium (In), le gallium (Ga), le germanium (Ge), l'antimoine (Sb), le bismuth (Bi), l'étain (Sn), le plomb (Pb) ou le titane (Ti) ;

- $M\beta''$ différent de $M\beta$ et de $M\beta'$, représente un atome choisi parmi les métaux de transition, les métaux de famille des alcalino-terreux, l'aluminium (Al), l'indium (In), le gallium (Ga), le germanium (Ge), l'antimoine (Sb), le bismuth (Bi), l'étain (Sn), le plomb (Pb) ou le titane (Ti) ;
- $0 < x \leq 0,5$ ;
- $0 \leq u \leq 0,5$ ;
- $(x + u) \leq 0,5$ ;
- $0 \leq y \leq 0,9$ ;
- $0 \leq v \leq 0,9$ ;
- $0 \leq (y + v) \leq 0,9$

et w est tel que la structure en cause est électriquement neutre ;

(ii) - éventuellement jusqu'à 25 % en volume d'un composé ($C_2$), différent du composé ($C_1$), choisi <u>ou bien parmi</u> les matériaux de type oxyde comme les oxydes de bore, d'aluminium, de gallium, de cérium, de silicium, de titane, de zirconium, de zinc, de magnésium ou de calcium, de préférence parmi l'oxyde de magnésium (MgO), l'oxyde de calcium (CaO), l'oxyde d'aluminium ($Al_2O_3$), l'oxyde de zirconium ($ZrO_2$), l'oxyde de titane ($TiO_2$) ou la cérine ($CeO_2$) ; les oxydes mixtes de strontium et d'aluminium $SrAl_2O_4$ ou $Sr_3Al_2O_6$ ; l'oxyde mixte de baryum et de titane ($BaTiO_3$) ; l'oxyde mixte de calcium et de titane ($CaTiO_3$) ; les silicates d'aluminium et/ou de magnésium comme la mullite ($2SiO_2.3Al_2O_3$), la cordiérite ($Mg_2Al_4Si_5O_{18}$) ou la phase spinelle $MgAl_2O_4$ ; l'oxyde mixte de calcium et de titane ($CaTiO_3$) ; les phosphates de calcium et leurs dérivés, comme l'hydroxy apatite $Ca_{10}(PO_4)_6(OH)_2$ ou le phosphate tricalcique $Ca_3(PO_4)_2$ ; ou encore des matériaux de type perovskite comme $La_{0,5}Sr_{0,5}Fe_{0,9}Ti_{0,1}O_{3-\delta}$, $La_{0,6}Sr_{0,4}Fe_{0,9}Ga_{0,1}O_{3-\delta}$, $La_{0,5}Sr_{0,5}Fe_{0,9}Ga_{0,1}O_{3-\delta}$ ou $La_{0,6}Sr_{0,4}Fe_{0,9}Ti_{0,1}O_{3-\delta}$ <u>ou bien parmi</u> des matériaux de type non oxyde et de préférence parmi les carbures ou les nitrures comme le carbure de silicium (SiC), le nitrure de bore (BN), le nitrure d'aluminium (AlN) ou le nitrure de silicium ($Si_3N_4$), les « sialons » (SiAlON) ; <u>ou bien parmi</u> le nickel (Ni), le platine (Pt), le palladium (Pd) ou le rhodium (Rh), les alliages métalliques ou des mélanges de ces différents types de matériaux et,

(iii) - éventuellement jusqu'à 2,5 % en volume d'un composé ($C_{1-2}$) produit d'au moins une réaction chimique représentée par l'équation :

$$xF_{C1} + yF_{C2} \rightarrow zF_{C1-2},$$

équation dans laquelle $F_{C1}$, $F_{C2}$ et $F_{C1-2}$, représentent les formules brutes respectives des composés ($C_1$), ($C_2$) et ($C_{1-2}$) et x, y et z représentent des nombres rationnels supérieurs ou égaux à 0 ;

6. Procédé tel que défini à la revendication 5, dans lequel le matériau céramique est un matériau (A) dans lequel la proportion volumique en composé ($C_{1-2}$), éventuellement présent, tend vers 0.

7. Procédé tel que défini à l'une des revendications 5 ou 6, dans lequel le matériau céramique est un matériau (A) dans lequel la proportion volumique en composé ($C_2$) éventuellement présent, est supérieure ou égale à 0,1 % et inférieure ou égale à 10 %.

8. Procédé tel que défini à l'une des revendications 5 à 7, dans lequel le matériau céramique est un matériau (A) dans lequel le composé ($C_1$) est choisi :

<u>ou parmi</u> les composés de formule (Ia) :

$$\text{(Ia),} \qquad La_{1-x-u}M\alpha'_xM\alpha''_uM\beta_{1-y-v}M\beta'_yM\beta''_vO_{3-w}$$

correspondant à la formule (I), dans laquelle $M\alpha$ représente un atome de lanthane ;
<u>ou parmi</u> les composés de formule (Ib) :

$$\text{(Ib),} \qquad M\alpha_{1-x-u}Sr_xM\alpha''_uM\beta_{1-y-v}M\beta'_yM\beta''_vO_{3-w}$$

correspondant à la formule (I), dans laquelle $M\alpha'$ représente un atome de strontium ;
<u>ou bien parmi</u> les composés de formule (Ic) :

$$\text{(Ic),} \qquad M\alpha_{1-x-u}M\alpha'_xM\alpha''_uFe_{1-y-v}M\beta'_yM\beta''_vO_{3-w}$$

correspondant à la formule (I), dans laquelle Mβ représente un atome de fer.

9. Procédé tel que défini à la revendication 8, dans lequel le matériau céramique est un matériau (A) dans lequel le composé ($C_1$) est choisi :

ou bien <u>parmi</u> les composés de formule (Id) :

$$(id), \quad La_{1-x-u}Sr_xM\alpha'_uFe_{1-y-v}M\beta''_vO_{3-w}$$

correspondant à la formule (Ia) dans laquelle Mα' représente un atome de strontium et Mβ représente un atome de fer ;
ou bien <u>parmi</u> les composés de formule (Ie) :

$$(Ie), \quad La_{1-x-u}M\alpha'_xAl_uFe_{1-y-v}M\beta'_yM\beta''_vO_{3-w}$$

correspondant à la formule (Ia) dans laquelle Mα" représente un atome d'aluminium et Mβ représente un atome de fer ;
ou bien <u>parmi</u> les composés de formule (If) :

$$(If), \quad La_{1-x}Sr_xFe_{1-y}M\beta'_yO_{3-w}$$

correspondant à la formule (Ia) dans laquelle Mα' représente un atome de strontium, Mβ représente un atome de fer et u et v sont égaux à 0 ;
ou bien <u>parmi</u> les composés de formule (Ig) :

$$(Ig), \quad La_{1-u}Ca_uFe_{1-y}M\beta'_yO_{3-w}$$

correspondant à la formule (Ia) dans laquelle Mα' représente un atome de calcium, Mβ représente un atome de fer et x et v sont égaux à 0 ;
ou bien <u>parmi</u> les composés de formule (Ih) :

$$(Ih), \quad La_{1-u}Ba_uFe_{1-y}M\beta'_yO_{3-w}$$

correspondant à la formule (Ia) dans laquelle Mα' représente un atome de baryum, Mβ représente un atome de fer et x et v sont égaux à 0 ;
ou bien <u>parmi</u> les composés de formule (Ii) :

$$(Ii), \quad La_{1-x-u}Sr_xCa_uFe_{1-y-v}M\beta'_yM\beta''_vO_{3-w}$$

correspondant à la formule (Id) dans laquelle Mα" représente un atome de calcium ;
ou parmi les composés de formule (Ij) :

$$(Ij), \quad La_{1-x-u}Sr_xCa_uFe_{1-y-v}M\beta'_yM\beta''_vO_{3-w}$$

correspondant à la formule (Id) dans laquelle Mα" représente un atome de baryum.

10. Procédé tel que défini à la revendication 9, dans lequel le matériau céramique est un matériau (A) dans lequel le composé ($C_1$) est choisi parmi les composés de formules :

$La_{1-x}Sr_xFe_{1-y}Ga_vO_{3-w}$, $La_{1-x}Sr_xFe_{1-y}Ti_yO_{3-w}$, $La_{1-x}Sr_xFeO_{3-w}$, $La_{1-u}Ca_uFe_{1-y}Ga_vO_{3-w}$, $La_{1-u}Ca_uFe_{1-y}Ti_yO_{3-w}$, $La_{1-u}Ca_uFeO_{3-w}$, $La_{1-u}Ba_uFe_{1-y}Ga_vO_{3-w}$, $La_{1-u}Ba_uFe_{1-y}Ti_yO_{3-w}$, $La_{1-u}Ba_uFeO_{3-w}$, $La_{1-x-u}Sr_xAl_uFe_{1-y}Ti_yO_{3-w}$, $La_{1-x-u}Sr_xCa_uFe_{1-y}Ti_yO_{3-w}$, $La_{1-x-u}Sr_xBa_uFe_{1-y}Ti_yO_{3-w}$, $La_{1-x-u}Sr_xAl_uFe_{1-y}Ga_vO_{3-w}$, $La_{1-x-u}Sr_xCa_uFe_{1-y}Ga_vO_{3-w}$, $La_{1-x-u}Sr_xBa_uFe_{1-y}Ga_vO_{3-w}$, $La_{1-x}Sr_xFe_{1-y}Ti_yO_{3-w}$, $La_{1-u}Ca_uFe_{1-y}Ti_yO_{3-w}$, $La_{1-u}Ba_uFe_{1-y}Ti_yO_{3-w}$, $La_{1-x}Sr_xFe_{1-y}Ga_vO_{3-w}$, $La_{1-u}Ca_uFe_{1-y}Ga_vO_{3-w}$, $La_{1-u}Ba_uFe_{1-y}Ga_vO_{3-w}$, $La_{1-u}Ba_uFeO_{3-w}$, $La_{1-u}Ca_uFeO_{3-w}$ ou $La_{1-x}Sr_xFeO_{3-w}$,

et plus particulièrement parmi ceux de formules :

$La_{0,6}Sr_{0,4}Fe_{0,9}Ga_{0,1}O_{3-w}$, $La_{0,9}Sr_{0,1}Fe_{0,9}Ga_{0,1}O_{3-w}$, $La_{0,5}Sr_{0,5}Fe_{0,9}T1_{0,1}O_{3-w}$,
$La_{0,9}Sr_{0,1}Fe_{0,9}Ti_{0,1}O_{3-w}$, $La_{0,6}Sr_{0,4}Fe_{0,2}Co_{0,8}O_{3-w}$ ou $La_{0,9}Sr_{0,1}Fe_{0,2}Co_{0,8}O_{3-w-}$

11. Procédé tel que défini à l'une des revendications 5 à 10, dans lequel le matériau céramique est un matériau (A) dans lequel le composé ($C_2$) est choisi parmi l'oxyde de magnésium (MgO), l'oxyde de calcium (CaO), l'oxyde d'aluminium ($Al_2O_3$), l'oxyde de zirconium ($ZrO_2$), l'oxyde de titane ($TiO_2$), les oxydes mixtes de strontium et d'aluminium $SrAl_2O_4$ ou $Sr_3Al_2O_6$, l'oxyde mixte de baryum et de titane ($BaTiO_3$), l'oxyde mixte de calcium et de titane ($CaTiO_3$), $La_{0,5}Sr_{0,5}Fe_{0,9}Ti_{0,1}O_{3-5}$ ou $La_{0,0}Sr_{0,4}Fe_{0,9}Ga_{0,1}O_{3-\delta}$.

**Figure 1 : Procédé d'élaboration du support poreux de microstructure contrôlée**

**Figure 2 : Observation MEB d'un porogène synthétique (PMMA)
et d'un porogène naturel (amidon de maïs)**

Td : température de déliantage
Tp : température de frittage

0,2 à 0,5 °/min

**Figure 3 : exemple de cycle de déliantage et de frittage**

**Figure 4 : microstructures poreuses obtenues avec différents taux de porogène : a) 55%vol b) 40%vol c) 35%vol**

**Figure 5 : photo des connections entre les pores et intérieur des pores, montrant la parfaite densification des espaces entre les pores**

Porosité issue du porogéne

Porosité intra-agglomérats

**Figure 6 : microstructure poreuse avec répartition du porogène aux joints de grains.**

Porosité issue du porogène

Porosité intra-agglomérat

**Figure 7 : microstructure poreuse présentant de la porosité intra-agglomérat.**

**Office européen des brevets**

**RAPPORT DE RECHERCHE EUROPEENNE**

Numéro de la demande

EP 05 30 0928

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 5 580 834 A (PFAFF ET AL) 3 décembre 1996 (1996-12-03) * exemple 2 * | 1-11 | C04B38/06 H01M8/12 |
| X | US 5 227 102 A (YAMADA ET AL) 13 juillet 1993 (1993-07-13) * exemple 1 * | 1-11 | |

**DOMAINES TECHNIQUES RECHERCHES (IPC)**

C04B
H01M

Le présent rapport a été établi pour toutes les revendications

| Lieu de la recherche | Date d'achèvement de la recherche | Examinateur |
|---|---|---|
| Munich | 23 février 2006 | Sala, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

................................................................
& : membre de la même famille, document correspondant

EPO FORM 1503 03.82 (P04C02)

**ANNEXE AU RAPPORT DE RECHERCHE EUROPEENNE**
**RELATIF A LA DEMANDE DE BREVET EUROPEEN NO.**

EP 05 30 0928

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

23-02-2006

| Document brevet cité au rapport de recherche | Date de publication | Membre(s) de la famille de brevet(s) | Date de publication |
|---|---|---|---|
| US 5580834 A | 03-12-1996 | AT 184585 T | 15-10-1999 |
| | | DE 69420741 D1 | 21-10-1999 |
| | | DE 69420741 T2 | 31-05-2000 |
| | | EP 0746532 A1 | 11-12-1996 |
| | | HK 1002001 A1 | 28-04-2000 |
| | | JP 8506563 T | 16-07-1996 |
| | | US 5422322 A | 06-06-1995 |
| | | WO 9418141 A1 | 18-08-1994 |
| | | US 5976429 A | 02-11-1999 |
| | | US 5656563 A | 12-08-1997 |
| US 5227102 A | 13-07-1993 | AUCUN | |

EPO FORM P0460

Pour tout renseignement concernant cette annexe : voir Journal Officiel de l'Office européen des brevets, No.12/82

## RÉFÉRENCES CITÉES DANS LA DESCRIPTION

**Documents brevets cités dans la description**

- US 6617270 B1
- US 2003039774 A1
- WO 0160515 A
- US 6645571 B1
- US 20040185181 A1
- US 2003052428 A1
- US 6573208 B1
- EP 0983980 A